# EUROPEAN PATENT APPLICATION

(11) **EP 2 508 081 A1**
(43) Date of publication of application: **10.10.2012**
(21) Application number: 11161788.2
(22) Date of filing: 08.04.2011
(51) Int. Cl.: A23L 1/00, A23L 1/182, A23L 1/29, A23L 1/30, A23L 1/168

(54) **Reconstituted rice containing fibers**

(71) Applicant: Bühler AG, 9240 Uzwil (CH)
(72) Inventor: Kunz, Roland, 8583 Donzhausen (CH); Stoffner, Daniel, 8580 Amriswil (CH)
(74) Representative: Hepp Wenger Ryffel AG

(57) **Abstract**

A process for the manufacture of reconstituted rice is disclosed which comprising the steps of a) providing or preparing a mixture containing comminuted rice matrix material; b) hydrating the mixture to obtain a paste and kneading the paste obtained until the rice starch is at least semi-gelatinized; c) forming the semi-gelatinized mass to strands and cutting them to obtain grains similar or equal to the size of rice grains; and d) drying the grains. The mixture provided or prepared in step a) contains fibers and/or fibers are added during step b) and/or between step b) and step c). According to the invention, the fibers have a water absorption capacity of at least 2, preferably at least 3, most preferably at least 4. Moreover, the invention relates to reconstituted rice produced by such a method, to a mixture comprising reconstituted rice and natural rice and to a use of reconstituted rice for enriching natural rice.

## Description

The present invention is related to a process for the manufacture of reconstituted rice, to the reconstituted rice produced by such a method, to a mixture comprising reconstituted rice and natural rice and to a use of reconstituted rice for enriching natural rice.

A related process is disclosed in WO 2005/053433. In this known process, a mixture of a comminuted rice matrix material, a micronutrient and an emulsifier are hydrated, kneaded, formed to strands, cut and dried. The grains obtained by this method are also referred to as reconstituted rice kernels and resemble natural rice. The publication also suggests to add vegetable fibers such as cellulose, hemi-cellulose or aleurone in order to strengthen the reconstituted rice kernels. However, this process does not result in satisfying products for many kinds of fibers and is also limited to small possible ranges of weight contents of the fibers in the product.

In another known process, natural rice grains (i. e. rice grains which have not been reconstituted) are coated with a solution containing fibers. However, without further precautions, these coated rice kernels obtained by this known method also have certain drawbacks. For instance, when the fibers contained in the rice are highly water-soluble, they are washed off the rice grains when the rice is cooked in water. The fibers can therefore escape into the cooking water, so that they are not available to the consumer.

It is an object of the present invention to provide a process for the manufacture of reconstituted rice in which these problems are overcome. In particular, the fibers contained in the reconstituted rice should not be easily washed out/off when the rice is cooked in water. At the same time, the reconstituted rice should preferably be stable and have an acceptable shape and texture after cooking.

This problem is solved by a process for the manufacture of reconstituted rice which comprises the following steps:
a) providing or preparing a mixture containing comminuted rice matrix material;
b) hydrating the mixture to obtain a paste and kneading the paste obtained until the rice starch is at least semi-gelatinized;
c) forming the at least semi-gelatinized mass to strands and cutting them to obtain grains similar or equal to the size of rice grains; and
d) drying the grains.

In this process, the mixture provided or prepared in step a) contains fibers and/or fibers are added during step b).

The term "comminuted rice matrix material" denotes any broken, cracked or otherwise degraded rice grains which are at least partially or predominantly comminuted, including rice semolina or rice flour. Moreover, within the context of the present invention, the term "fiber" denotes indigestible complex carbohydrates originating from the cell walls of plants.

According to the invention, the fibers have a water absorption capacity of at least 2, preferably at least 3, most preferably at least 4. Within the context of the present invention, the water absorption capacity is determined as follows: A sample of dry fibers is first weighed and then soaked in a tank of water having a temperature of 20°C for 3 minutes and at a normal pressure of 101325 Pa. The fibers are then removed from the tank with the help of a sieve. Subsequently, superfluous water is allowed to drip off through the sieve for 2 minutes. The wet sample containing the remaining absorbed water is then weighed again. The difference of both weights is then determined and divided by the initial weight, which yields the water absorption capacity. For example, when a sample has an initial dry weight of 100 g and a final wet weight of 250 g, the water absorption capacity is (250 g - 100 g)/100 g = 1.5.

Therefore, the fibers are only washed off/out to a negligible extent when the reconstituted rice is cooked in water, and embedding the fibers in the matrix material is now reliably made possible. In consequence, a higher portion of the fibers remains within the reconstituted rice and is therefore available to the consumer, therefore providing a more enriched food product.

The invention provides flexibility with respect to the point of addition of the fibers, based on the critical water absorption capacity outlined above. In any case, the fibers should be added before step c).

In step b), the mixture may also be heated in order to enhance the semi-gelatinization. Moreover, steam and/or water may be added to the mixture in step b).

The fibers may comprise corn fibers and/or pea fibers and/or rice fibers and/or white corn fibers and/or okara fibers and/or linseed fibers and/or bean fibers and/or oat fibers and/or carrot fibers and/or potato fibers and/or apple fibers and/or algae fibers and/or leguminose fibers.

Tests have shown that the addition of rice fibers tends to produce a brown color of the final product, which is not desirable for many consumers. In order to avoid this problem, at least some of the fibers used in the process may be at least partially bleached. In particular, the fibers contained in the mixture provided or prepared in step a) and/or added during step b) may be at least partially bleached. The fibers may be bleached, for example, by treatment with a peroxide, in particular hydrogen peroxide.

In a preferable embodiment, the fibers contain or consist of pea fibers. Pea fibers were found to produce only a minor discoloration of the reconstituted rice, in particular a smaller discoloration than that produced by rice fibers or corn fibers.

Advantageously, the total amount of fibers contained in the mixture provided or prepared in step a) and/or added during step b) is chosen such that the total dietary fiber in the final, dried grains lies in the range between 5 % and 40 %, preferably between 10 % and 30 %, most preferably between 15 % and 25 % by weight of the dried grains. Within the scope of the present invention, the total dietary fiber is determined according to the AOAC official method of analysis 985.29, for example with the Megazyme Kit obtainable from Megazyme International Ireland Limited. The person skilled in the art may easily calculate or determine by routine experiments the amounts of fibers to be contained in the mixture provided or prepared in step a) and/or to be added during step b) in order to obtain final, dried grains having a total dietary fiber in the above range.

A total dietary fiber within these ranges satisfies a compromise: On the one hand, a high total dietary fiber is preferred in order to create the desired texture. On the other hand, a higher total dietary fiber would lead to an unnatural or unpleasant taste.

With preference, at least 90 %, preferably at least 95 %, most preferably at least 99 % by weight of the fibers have a length in the range from 20 µm to 500 µm, preferably from 50 µm to 250 µm.

Step b) of hydrating and kneading may be performed in an extruder. Possible operational parameters for the extruder (including water contents, temperatures and treatment times) are disclosed in the above-mentioned publication WO 2005/053433. The disclosure of this document with respect to these parameters (including water contents, temperatures and treatment times) is hereby incorporated by reference.

Alternatively, it is also possible to perform at least a partial hydration and heating in a preconditioner, and then an optional further hydration, heating and kneading in an extruder. A preconditioner is advantageously used when the fibers have a high water absorption capacity. Moreover, a preconditioner helps to pretreat the starch contained in the rice in such a way that it is not damaged. In addition, the use of a preconditioner allows a shorter extruder configuration.

Step c) of forming and cutting may be performed with equipment known per se. For step d), any known dryer may be used which is suitable for drying conventional reconstituted rice.

A further aspect of the present invention is reconstituted rice comprising comminuted rice matrix material and fibers, in which the fibers have a water absorption capacity of at least 2, preferably at least 3, most preferably at least 4. In particular, the reconstituted rice may be produced by a method as described above.

Preferably, the fibers contained in the reconstituted rice have a water absorption capacity of at least 2, preferably at least 3, most preferably at least 4.

The fibers contained in the reconstituted rice may comprise corn fibers and/or pea fibers and/or rice fibers and/or white corn fibers and/or okara fibers and/or linseed fibers and/or bean fibers and/or oat fibers and/or carrot fibers and/or potato fibers and/or apple fibers and/or algae fibers and/or leguminose fibers. At least some of the fibers, in particular the rice fibers, may be at least partially bleached.

Preferably, the total dietary fiber within in the reconstituted rice is in the range between 5 % and 40 %, preferably between 10 % and 30 %, most preferably between 15 % and 25 % by weight of the grains.

A further aspect of the invention is a mixture comprising reconstituted rice as disclosed above and natural rice. It is therefore possible to produce and store reconstituted rice as disclosed above with a certain total dietary fiber. By mixing this reconstituted rice with natural rice in an appropriate mass ratio, the total dietary fiber may be flexibly adjusted to individual desires.

Likewise, the invention also relates to the use of reconstituted rice as disclosed above for enriching natural rice.

The invention will now be further explained by several embodiments and examples, wherein
- Figure 1: shows a first embodiment of a facility for manufacturing reconstituted rice;
- Figure 2: shows a second embodiment of a facility for manufacturing reconstituted rice;
- Figure 3: shows a third embodiment of a facility for manufacturing reconstituted rice;
- Figure 4: shows a fourth embodiment of a facility for manufacturing reconstituted rice.

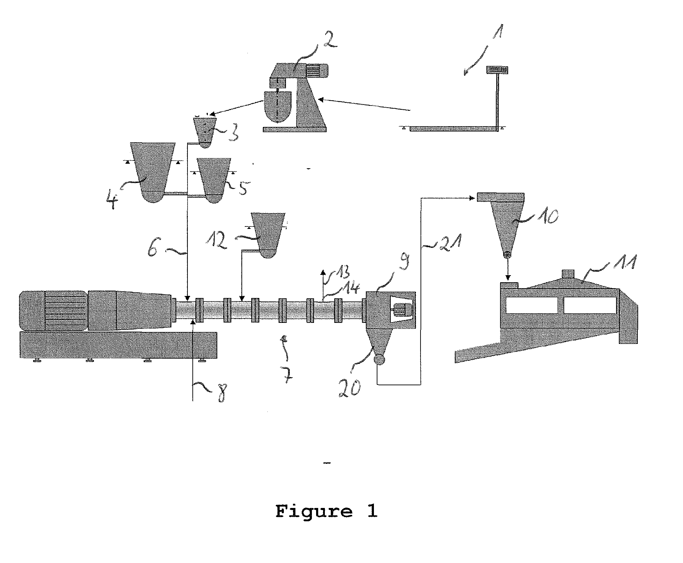

Figure 1 shows a first embodiment of a facility for manufacturing reconstituted rice in accordance with the invention. In a dosing member 1, a premix comprising rice flour and an emulsifier having a weight ratio of 2:1 is obtained. In mixer 2, these components are thoroughly mixed and fed into a first hopper 3, from which it is dispensed into a feedline 6. From a second hopper 4, rice flour is added at a rate between 1 and 90 kg/h. Moreover, from a third hopper 5, fibers are added. By the process steps described so far, a mixture containing comminuted rice matrix material and fibers is obtained.

This mixture is fed into an extruder 7 via feedline 6. By adding water through feedline 8, the mixture is hydrated to obtain a paste. This paste is then kneaded within the extruder 7 until the rice starch is at least semi-gelatinized. From optional hopper 12, additional fibers may be added into the extruder 7 after hydration. A venting 13 may be provided through a venting opening 14 in order to cool down the mass, which prevents the strands to be extruded from expanding. The mass is then formed to strands by extrusion through an extrusion die and cut by a cutter 9 to obtain grains similar or equal to the size of rice grains. These grains are collected by a collecting hopper 20 and transported to a fluidized bed dryer 11 via a pneumatic transport line 21, where the grains are dried.

The rate at which the premix is dispensed from first hopper 3 is chosen such that the amount of emulsifier lies in the range from 0.5 % to 1 % by weight of the total dry infeed. This total dry infeed is the total amount of premix from first hopper 3, rice flour from second hopper 4, fibers from third hopper 5 and, if applicable, fibers from optional hopper 12 directly into the extruder 7. Moreover, the rate at which the fibers are dispensed from hopper 5 and, optionally, from hopper 12 is chosen such that the total amount of fibers lies in the range from 15 % to 25 % by weight of the total dry infeed.

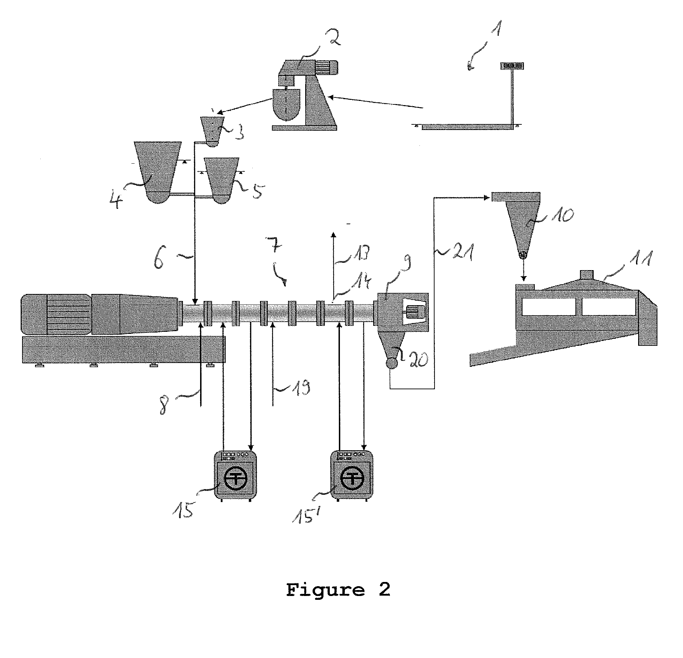

Figure 2 shows a second embodiment of the facility. As opposed to the embodiment depicted in Figure 1, this second embodiment contains two tempering unit 15 and 15', which are connected to the extruder 7 to provide a water circulation. Moreover, additional water is also introduced through feedline 19, which is arranged downstream of the first tempering unit 15 and upstream of the second tempering unit 15'. This additional water allows to control the viscosity of the mass. Moreover, by the first addition of water through feedline 8, the rice starch is substantially saturated with water. The water introduced through feedline 19 is then predominantly available to saturate the fibers.

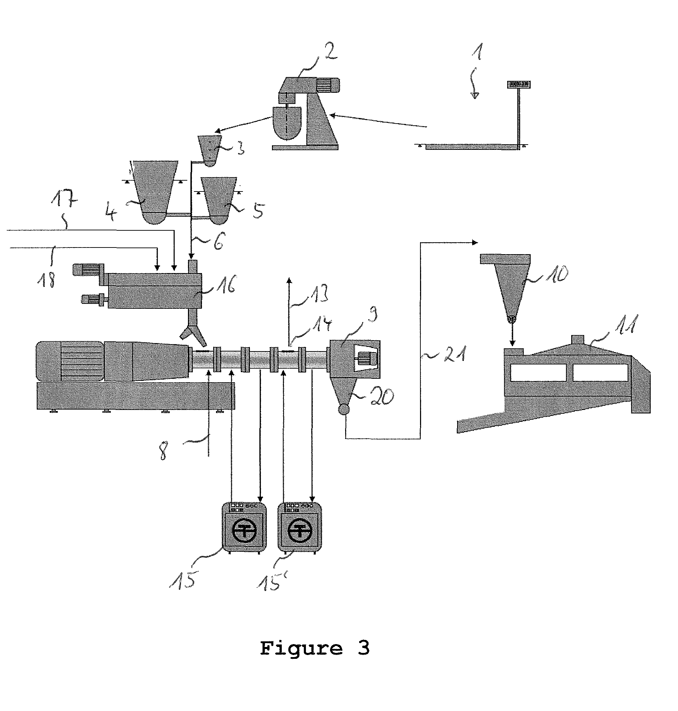

In the third embodiment shown in Figure 3, the mixture comprising the rice flour, emulsifier and fibers is first directed into a preconditioner 16 (for example model BCTC obtainable from Bühler AG, 9240 Uzwil, Switzerland), into which steam is introduced through feedline 17 and/or water is introduced through feedline 18. The preconditioning helps to pretreat the starch contained in the rice without damage.

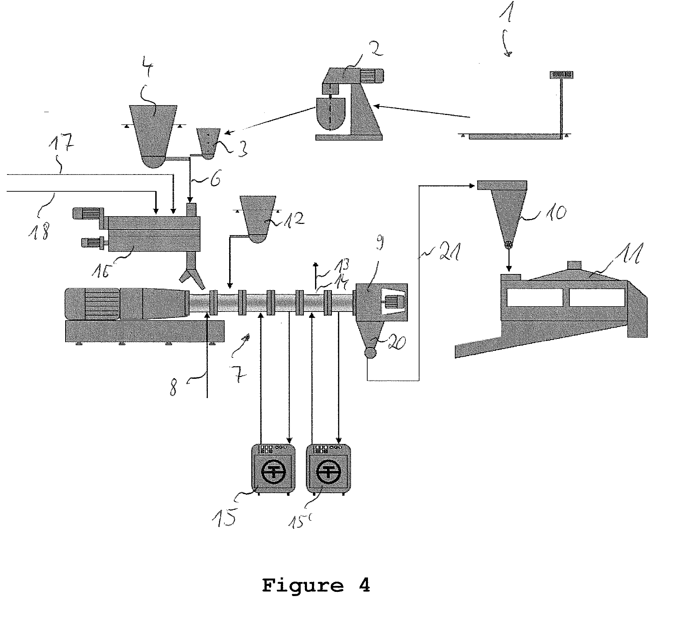

Finally, Figure 4 shows a fourth embodiment of a facility. In contrast to Figure 3, this embodiment comprises no hopper 5 for adding fibers to the dry mixture. Instead, fibers are added only after hydration into extruder 7.

The comminuted rice used for preparing the mixture in step a) may, for example, be milled on a hammer mill, such as on a DFZC mill obtainable from Bühler AG, 9240 Uzwil, Switzerland. This hammer mill contains conidur sieves having openings of 0.8 mm. The milled products may then be sieved (for example with a MPAR plan sifter, also obtainable by Bühler AG) to particle sizes below 500 µm before used in the process. As an emulsifier, DIMODAN HP may be used, which is a distilled monoglyceride made from edible, fully hydrogenated palm based oil. The fibers may be, for example, corn fibers, pea fibers or rice fibers.

The following table provides data of 9 samples of reconstituted rice prepared according to the invention (2-10). Example 1 is a comparative example without fibers. Example 11 contains wheat dextrin, which has a water absorption capacity of less than 2 and is therefore also not covered by the invention. All samples were prepared with a facility according to Figure 3. The fiber content refers to the content of the fibers by weight of the total dry infeed, as defined above.

| Example # | Fiber | Fiber content |
|---|---|---|
| 1 | - (comparative example) | 0 % |
| 2 | corn | 15 % |
| 3 | corn | 15 % |
| 4 | corn | 25 % |
| 5 | corn | 25 % |
| 6 | pea | 15 % |
| 7 | pea | 25 % |
| 8 | pea | 25 % |
| 9 | pea | 25 % |
| 10 | pea | 25 % |
| 11 | wheat dextrin (comparative example) | 25 % |

All samples prepared according to the invention had an acceptable shape and a very good texture after cooking. Moreover, at most a slight amount of fibers escaped during cooking of the reconstituted rice.

## Claims

1. Process for the manufacture of reconstituted rice, comprising the steps of
a) providing or preparing a mixture containing comminuted rice matrix material;
b) hydrating the mixture to obtain a paste and kneading the paste obtained until the rice starch is at least semi-gelatinized;
c) forming the at least semi-gelatinized mass to strands and cutting them to obtain grains similar or equal to the size of rice grains; and
d) drying the grains;
wherein the mixture provided or prepared in step a) contains fibers and/or fibers are added during step b),
**characterized in that**
the fibers have a water absorption capacity of at least 2, preferably at least 3, most preferably at least 4.

2. Process according to claim 1,
**characterized in that**
the fibers comprise corn fibers and/or pea fibers and/or rice fibers and/or white corn fibers and/or okara fibers and/or linseed fibers and/or bean fibers and/or oat fibers and/or carrot fibers and/or potato fibers and/or apple fibers and/or algae fibers and/or leguminose fibers.

3. Process according to one of the previous claims,
**characterized in that**
at least some of the fibers, in particular the rice fibers, contained in the mixture provided or prepared in step a) and/or added during step b) are at least partially bleached, for example by treatment with a peroxide, in particular hydrogen peroxide.

4. Process according to one of the previous claims,
**characterized in that**
the total amount of fibers contained in the mixture provided or prepared in step a) and/or added during step b) is chosen such that the total dietary fiber in the final, dried grains lies in the range between 5 % and 40 %, preferably between 10 % and 30 %, most preferably between 15 % and 25 % by weight of the dried grains.

5. Process according to one of the previous claims,
**characterized in that**
at least 90 %, preferably at least 95 %, most preferably at least 99 % by weight of the fibers have a length in the range from 20 µm to 500 µm, preferably from 50 µm to 250 µm.

6. Reconstituted rice, in particular produced by a method according to one to the preceding claims, comprising comminuted rice matrix material and fibers,
**characterized in that**
the fibers have a water absorption capacity of at least 2, preferably at least 3, most preferably at least 4.

7. Reconstituted rice according to claim 6,
**characterized in that**
the fibers comprise corn fibers and/or pea fibers and/or rice fibers and/or white corn fibers and/or okara fibers and/or linseed fibers and/or bean fibers and/or oat fibers and/or carrot fibers and/or potato fibers and/or apple fibers and/or algae fibers and/or leguminose fibers.

8. Reconstituted rice according to one of claims 6 and 7,
**characterized in that**
at least some of the fibers, in particular the rice fibers, are at least partially bleached.

9. Reconstituted rice according to one of claims 6 to 8,
**characterized in that**
the total dietary fiber within in the reconstituted rice is in the range between 5 % and 40 %, preferably between 10 % and 30 %, most preferably between 15 % and 25 % by weight of the grains.

10. Mixture comprising reconstituted rice according to one of claims 6 to 9 and natural rice.

11. Use of reconstituted rice according to one of claims 6 to 9 for enriching natural rice.
